# EUROPÄISCHE PATENTSCHRIFT

(11) **EP 4 109 127 B1**
(45) Veröffentlichungstag und Bekanntmachung des Hinweises auf die Patenterteilung: **10.05.2023**
(21) Anmeldenummer: 21180683.1
(22) Anmeldetag: 21.06.2021
(51) Int. Cl.: G01S 7/481, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION DES OBJETS

(43) Veröffentlichungstag der Anmeldung: 28.12.2022
(73) Patentinhaber: SICK AG, 79183 Waldkirch (DE)
(72) Erfinder: Jachmann, Fabian, 79102 Freiburg (DE)

(56) Entgegenhaltungen:
- EP-A1- 3 517 999
- EP-A1- 3 521 860
- EP-B1- 1 927 867

## Beschreibung

Die Erfindung betrifft einen optoelektronischen Sensor, insbesondere Laserscanner sowie ein Verfahren zur Erfassung von Objekten in einem Überwachungsbereich nach dem Oberbegriff von Anspruch 1 beziehungsweise 12.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird. In einem beispielsweise aus der EP 2 469 296 B1 bekannten Pulsmittelungsverfahren wird für eine Messung eine Vielzahl von Einzelpulsen ausgesandt, und die Empfangspulse werden statistisch ausgewertet.

Eine wichtige Anwendung ist die Absicherung einer Gefahrenquelle in der Sicherheitstechnik. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Nothalt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Der Messbereich eines Laserscanners ist auf dessen zweidimensionale Scanebene beschränkt. Zudem ist ein hohes Maß an Kalibrierung erforderlich, damit die Scanebene parallel zum Boden verläuft. Dies wird bei einer hohen Reichweite und einem großen Scanwinkel noch schwieriger. In Umgebungen mit Störobjekten, insbesondere im Outdoorbereich, kann es zu Verfügbarkeitsproblemen kommen, also unnötigen Abschaltungen durch eigentlich nicht sicherheitsrelevante Objekte. Der Detektionsalgorithmus filtert zwar womöglich zu kleine oder transiente Objekte heraus, reagiert aber durchaus noch auf persistente Störobjekte wie beispielsweise einzelne Grashalme.

Außerhalb der Sicherheitstechnik sind Laserscanner bekannt, die einen Fächer aus mehreren Scanlagen mit regelmäßigem oder unregelmäßigem gegenseitigen Winkelabstand und somit letztlich einen dreidimensionalen Raumbereich überwachen. Solche Laserscanner werden als Mehrlagen- oder manchmal auch Mehrebenenscanner bezeichnet. Es gibt aber bisher keine sicheren Mehrlagenscanner, also solche, die nach den Anforderungen funktionaler Sicherheit im obigen Sinne für den Einsatz in der Sicherheitstechnik ausgerüstet und zertifiziert sind. Existierende Sicherheitslaserscanner sind stets Einlagen- oder Einebenenscanner.

Für die Erfassung dreidimensionaler Raumbereiche sind 3D-Kameras bekannt, die auch sicherheitstechnische Anwendungen lösen. Mehrlagenscanner und 3D-Kameras haben stark unterschiedliche Eigenschaften hinsichtlich Reichweite, Sichtfeld, Auflösung insbesondere in Elevationsrichtung und Qualität der erfassten 3D-Messpunkte. Keine der beiden Technologien kann allgemein als besser bezeichnet werden, die Eignung hängt von der konkreten Anwendungssituation ab.

Es besteht demnach ein bislang unerfüllter Bedarf an einem Sicherheitslaserscanner mit dreidimensionaler Erfassung. Dabei lassen sich aber weder die Vorgehensweisen von Einlagenscannern noch von 3D-Kameras einfach übertragen. Würde in einem Mehrlagenscanner in Analogie zu der einzigen Scanebene eines Einlagenscanners naiv jede Objekterkennung in einer der mehreren Scanlagen als sicherheitskritisch bewertet, so vervielfachten sich die unnötigen Abschaltungen. Zudem müssten Schutzfelder zumindest in den nach unten gerichteten Scanlagen mit Rücksicht auf den Boden konfiguriert werden, um wenigstens vom Boden verursachte permanente Fehlabschaltungen zu vermeiden. Die Auswertungen für 3D-Punktewolken einer 3D-Kamera andererseits sind ausgesprochen komplex und mit den üblichen Rechen- und Speicherkapazitäten eines Laserscanners nicht zu leisten. Außerdem sind solche Auswertungen für Punktwolken eines Laserscanners beispielsweise wegen der völlig unterschiedlichen vertikalen Auflösung gar nicht geeignet.

Stellvertretend für zahlreiche Dokumente wird die EP 3 517 999 A1 als eine Offenbarungsquelle für einen Mehrlagenscanner genannt. Darin ist am Rande die Möglichkeit eines Einsatzes im Bereich der Sicherheitstechnik mit Überwachung von Schutzfeldern erwähnt. Das wiederholt aber lediglich die von Einlagenscannern bekannte Schutzfeldauswertung und sichere Auslegung, die so nicht auf Mehrlagenscanner übertragbar ist oder die oben schon angesprochenen zahllosen Fehlabschaltungen bewirken würde. Die eigentliche Stoßrichtung der EP 3 517 999 A1 ist eine besondere optische Konfiguration, die in einem sicheren Mehrlagenscanner ebenso einsetzbar ist, aber nicht zu dessen Sicherheit und Verfügbarkeit beiträgt.

Die EP 1 927 867 B1 offenbart einen sicheren Mehrlagensensor, der in einer Ausführungsform einen Fächer divergierender Überwachungslagen erzeugt. Es handelt sich jedoch nicht um einen Laserscanner, die Lagen werden durch unbewegliche und dafür ortsauflösende Lichtempfänger erfasst. Außerdem wird auf keine Besonderheiten der Auswertung für die sichere Erfassung von Objekten in mehreren Lagen eingegangen.

In der EP 3 220 164 B1 wird ein Laserscanner beschrieben, der bei seiner Schutzfeldüberwachung zu kleine und kurzzeitig erfasste Objekte als nicht sicherheitsrelevant ausfiltert. Diese Auswertung bezieht sich aber nur auf die einzige Scanebenelage eines Einlagenscanners.

In der DE 101 41 294 B4 wird der rückwärtige Scanbereich eines Laserscanners für den Einsatz in einem Fahrzeug durch Spiegelanordnungen genutzt, um im vorderen Scanbereich zusätzliche Abtastlagen zu gewinnen. Das Ziel ist aber nicht Mehrlagenabtastung, sondern Redundanz, sei es zur Erhöhung der effektiven Abtastfrequenz oder zum Ausgleich von Nickbewegungen des Fahrzeugs. Dementsprechend ist dem Dokument keine für einen sicheren Mehrlagenscanner geeignete Auswertung zu entnehmen. Die DE 101 41 294 B4 beschreibt ferner eine Bodenerkennung. Letzteres ist auch in EP 3 521 860 A1 für einen Laserscanner mit einem komplexeren Bodenmodell beschrieben.

Es ist daher Aufgabe der Erfindung, die sichere Überwachung mit einem gattungsgemä-ßen Sensor zu verbessern.

Diese Aufgabe wird durch einen optoelektronischen Sensor, insbesondere Laserscanner sowie ein Verfahren zur Erfassung von Objekten in einem Überwachungsbereich nach Anspruch 1 beziehungsweise 12 gelöst. Ein Lichtsender sendet mehrere voneinander separierte Lichtstrahlen in den Überwachungsbereich aus, wobei dafür mehrere Lichtquellen und/oder aufspaltende optische Elemente vorgesehen sein können. Die ausgesandten Lichtstrahlen sind nicht als Strahlen im Sinne der Strahlenoptik innerhalb eines größeren Lichtbündels zu verstehen, sondern als vereinzelte Abtaststrahlen, insbesondere kollimiert und mit kleinem Querschnitt, so dass im Überwachungsbereich beim Auftreffen auf ein Objekt entsprechend vereinzelte, voneinander beabstandete Lichtflecken entstehen.

Mindestens ein Lichtempfänger ist in der Lage, ein jeweiliges Empfangssignal aus den aus unterschiedlicher Richtung remittierten Lichtstrahlen zu erzeugen, wenn die ausgesandten Lichtstrahlen an Objekten im Überwachungsbereich zurückgeworfen werden. Dafür sind mehrere Lichtempfangselemente und/oder Bereiche beziehungsweise Pixel(gruppen) eines Lichtempfängers vorgesehen. Zwischen gerichteter Reflexion und ungerichteter Streuung oder Remission wird hier begrifflich nicht unterschieden.

Eine bewegliche, vorzugsweise rotierende Ablenkeinheit führt die ausgesandten Lichtstrahlen periodisch durch den Überwachungsbereich. Jeder der ausgesandten Lichtstrahlen tastet dabei eine eigene Abtast- oder Scanlage ab, und insgesamt ergibt sich eine Mehrlagenabtastung und insbesondere ein Mehrlagen- oder Mehrlagen(laser)scanner. Lichtsender und/oder der Lichtempfänger sind bevorzugt mit der Ablenkeinheit mitbewegt angeordnet. Dadurch entsteht ein beweglicher, insbesondere rotierender Messkopf oder Optikkopf. Alternativ sind Lichtsender und/oder Lichtempfänger stationär und ruhen demnach gegenüber dem Sensor oder dessen Gehäuse, während die Ablenkeinheit beispielsweise als Drehspiegel ausgeführt ist. In diesem Fall ist zu beachten, dass die Lagen im Verlauf der Bewegung des Drehspiegels ihre Höhenlage verändern.

Eine Steuer- und Auswertungseinheit erfasst pro Lichtstrahl oder Scanlage durch Auswertung des Empfangssignals Objekte und bestimmt dazu insbesondere die Lichtlaufzeit und somit den Abstand zu dem jeweiligen angetasteten Objekt.

Die Erfindung geht von dem Grundgedanken einer sicheren Auswertung zur Personenerkennung über die mehreren Scanlagen hinweg aus. Dazu werden sicherheitsrelevante Objekte zunächst innerhalb der jeweiligen Scanlage erfasst. Pro Scanlage entspricht diese Auswertung insbesondere derjenigen eines herkömmlichen sicheren Einlagenscanners, sie wird für die mehreren Scanlagen vervielfacht. Anschließend wird die Information, in welchen Scanlagen jeweils ein sicherheitsrelevantes Objekt als anwesend erkannt oder festgestellt wurde, übergreifend über die Scanlagen bewertet und anhand dessen entschieden, ob eine sicherheitsgerichtete Reaktion ausgelöst wird. Dies geschieht insbesondere durch Ausgabe eines entsprechenden Absicherungssignals an eine von dem Sensor überwachte Maschine, die daraufhin in einen sicheren Zustand übergeht, beispielsweise durch Abschalten, Bremsen oder Ausweichen.

Erfindungsgemäß werden folglich die Messungen aus den einzelnen Scanlagen nicht zu einer gemeinsamen 3D-Punktwolke verschmolzen und gemeinsam ausgewertet. Vielmehr bleibt die eigentliche Objekterfassung innerhalb der jeweiligen Scanlagen. Die aufbereitete Anwesenheitsinformation sicherheitsrelevanter Objekte in den einzelnen Scanlagen wird dann übergeordnet und zusammenfassend ausgewertet, ob die erkannte Konstellation einer sicherheitsgerichteten Reaktion bedarf.

Die Erfindung hat den Vorteil, dass eine sichere und robuste Objekt- oder Personenerfassung bei einer Mehrlagenabtastung ermöglicht wird. Dabei werden anders als bei 3D-Kameras die großen Scanwinkel und hohen Reichweiten einer scannenden Erfassung genutzt. Besonders geeignet ist der erfindungsgemäße Sensor für mobile Anwendungen beispielsweise an einem Fahrzeug. Es kann eine bessere Toleranz und Robustheit als bei einem Einlagenscanner erreicht werden. Das betrifft Störobjekte, wie Staub oder Regen, eine Neigung des Sensors aufgrund der Einbauposition oder einer Bewegung in mobiler Anwendung sowie Unebenheiten, Neigungen oder sonstige Konturen des Bodens. Die Auswertung bleibt einfach, um mit geringen Rechen- und Speicherkapazitäten auszukommen und den für den Einsatz in der Sicherheitstechnik erforderlichen theoretischen Nachweis der sicheren Detektionsfähigkeit möglichst übersichtlich zu halten. Außerdem können durch die zunächst auf einzelne Scanlagen beschränkte Auswertung existierende Softwarebausteine weiterverwendet werden.

Die Steuer- und Auswertungseinheit ist dafür ausgebildet, eine sicherheitsgerichtete Reaktion bei Feststellung der Anwesenheit eines Objekts in mehreren Scanlagen oder in der untersten Scanlage oberhalb des Bodens auszulösen. Es wird somit grundsätzlich eine festgestellte Anwesenheit eines Objekts in mehreren Scanlagen verlangt, um eine sicherheitsgerichtete Reaktion auszulösen. Diese UND-Verknüpfung von erfassten sicherheitsrelevanten Objekten über mehrere Scanlagen sorgt für eine erhöhte Robustheit. Einen Sonderfall stellt eine liegende Person dar, die wegen eines geringen dem Sensor zur Abtastung angebotenen Querschnitts möglicherweise nur in einer einzigen Scanlagen erfasst wird. Diese Scanlage ist dann zwangsläufig die unterste Scanlage oberhalb des Bodens. Zur Erkennung von liegenden Personen reicht ausnahmsweise die festgestellte Anwesenheit eines sicherheitsrelevanten Objekts nur in der einen untersten Scanlage oberhalb des Bodens für das Auslösen einer sicherheitsgerichteten Reaktion aus. Wegen des Bezugs zum Boden ist der Sensor vorzugsweise auf eine Horizontalabsicherung beschränkt. Der Sensor ist dann zumindest grob und insgesamt parallel zum Boden ausgerichtet, was natürlich nicht für alle einzelnen Scanlagen gelten kann, die bei einem Mehrlagenscanner bereits zueinander einen nicht parallelen Fächer bilden.

Die Steuer- und Auswertungseinheit ist bevorzugt dafür ausgebildet, die Anwesenheit eines Objekts in mehreren Scanlagen festzustellen, wenn die Anwesenheit in den Scanlagen in gleichen oder benachbarten Winkelstellungen festgestellt wird. Die Anwesenheit in gleichen oder benachbarten Winkelstellungen ist eine Kohärenzbedingung. Es soll dasselbe Objekt sein, das über die Scanlagen hinweg mehrfach erfasst ist. Das ist nur der Fall, wenn die Erfassung in einem selben oder ähnlichen Scan- beziehungsweise Azimutwinkel erfolgt. Eine mehrfache Erfassung von Objekten in mehreren Scanlagen bei großem Azimut-Winkelabstand wird dann nicht als sicherheitsrelevant, sondern als zufällige gleichzeitige Störung aufgefasst. Die gleichen oder benachbarten Winkelstellungen werden vorzugsweise durch diskretisierte Winkelsektoren geprüft. Es wird dann gefordert, dass das Objekt in den mehreren Scanlagen in den gleichen oder in benachbarten Winkelsektoren erfasst ist. Dabei bedeutet Nachbarschaft vorzugsweise direkte Nachbarschaft, es gibt also keine weiteren Winkelsektoren zwischen benachbarten Winkelsektoren.

Die Steuer- und Auswertungseinheit ist bevorzugt dafür ausgebildet, eine sicherheitsgerichtete Reaktion bei Feststellung der Anwesenheit eines Objekts in einer Anzahl Scanlagen auszulösen, die bei einem nahen Objekt größer ist als bei einem fernen Objekt. Mit anderen Worten wird für eine nahe Person oder ein nahes Objekt eine sicherheitsgerichtete Reaktion erst bei Feststellung der Anwesenheit in einer größeren Anzahl Scanlagen ausgelöst. Bei einer fernen Person oder einem fernen Objekt genügen dafür schon weniger Scanlagen. Nochmals anders ausgedrückt ist die geforderte Kohärenz der Objekterfassung über die Scanlagen hinweg in der Nähe größer als in der Ferne. Es bleibt vorzugsweise weiterhin die Winkelbedingung gestellt, d.h. ein Objekt muss über die Scanlagen hinweg in einem gleichen oder benachbarten Scan- oder Azimutwinkel erfasst werden, um eine sicherheitsgerichtete Reaktion auszulösen.

Die Steuer- und Auswertungseinheit ist bevorzugt dafür ausgebildet, für Objekte in einem Abstand bis zu einer ersten sicheren Reichweite eine sicherheitsgerichtete Reaktion bei Feststellung der Anwesenheit eines Objekts in allen relevanten Scanlagen auszulösen, wobei die erste sichere Reichweite insbesondere der sicheren Reichweite eines Sicherheitslaserscanners mit nur einer Scanlage entspricht. Bei einem Abstand eines Objekts zum Sensor bis zu einer ersten sicheren Reichweite wird somit eine Erfassung eines Objekts in allen relevanten Scanlagen gefordert. Das versteht sich unter zwei Bedingungen: Objekterfassungen sind bevorzugt nur bis zu einer Mindesthöhe relevant, da kleine Personen in größerem Abstand von den oberen Scanebenen nicht mehr erfasst werden. Und eine Objekterfassung der untersten Scanebenen über dem Boden genügt allein, um den Ausnahmefall einer liegenden Person zu berücksichtigen Somit sind "relevant" zum einen diejenigen Scanlagen, in denen unter allen Bedingungen eine aufrechte Person zu erwarten ist. Dies könnte für eine gebeugte Stellung etwa der Bereich 50 mm bis 1000 mm über dem Boden sein. Daneben ist zu berücksichtigen, dass eine liegende oder sitzende Person ebenfalls erfasst werden muss. Für die Objekterfassungen in Bodennähe von beispielsweise 50 mm bis 250 mm Höhe wird deshalb keine Kohärenzbedingung über mehrere Scanlagen gefordert. Allerdings kann hier eine relaxierte räumliche Filterung vorgenommen werden. Liegende oder sitzende Personen werden in einem deutlich größeren Azimutwinkel erfasst als beispielsweise ein Bein. Es kann hier beispielhaft eine minimale Objektauflösung von 200 mm in horizontaler Richtung angenommen werden. Die erste sichere Reichweite entspricht vorzugsweise derjenigen eines vergleichbaren Einlagenscanners, der selbst sehr dunkle Ziele noch erfasst und somit praktisch alle Objekte erkennt. Es ist daher ausgeschlossen, dass eine Scanlage ein tatsächlich anwesendes Objekt nicht erfasst, und deshalb ist gerechtfertigt, diese Erfassung für ein sicherheitsrelevantes Objekt zu verlangen.

Die Steuer- und Auswertungseinheit ist bevorzugt dafür ausgebildet, für Objekte in einem Abstand jenseits der ersten sicheren Reichweite bis hin zu einer zweiten sicheren Reichweite eine sicherheitsgerichtete Reaktion bei Feststellung der Anwesenheit eines Objekts in mindestens zwei oder mehr insbesondere zueinander benachbarten Scanlagen auszulösen. Die Untergrenze für die Anzahl Scanlagen liegt somit vorzugsweise bei zwei, kann aber auch höher sein. Es ist eine Untergrenze, wenn in mehr als dieser Anzahl Scanlagen ein sicherheitsrelevantes Objekt erfasst wurde, ist die Bedingung für das Auslösen einer sicherheitsrelevanten Reaktion übererfüllt. Die zweite sichere Reichweite ist größer als die erste sichere Reichweite, und der Sensor garantiert in diesen größeren Abständen nur die Erfassung etwas höherer Objekte. In dem Bereich dazwischen ist denkbar, dass ein dunkles Objekt in einer Scanlage übersehen wird. Nicht vorstellbar ist aber, dass zahlreiche Scanlagen auf derart dunkle Objektbereiche treffen, da eine Person nicht vollständig in nachtschwarzen Samt gehüllt ist. In dem Abstandsbereich zwischen erster und zweiter sicherer Reichweite kann somit nicht mehr erwartet werden, dass eine Person in allen Scanlagen erfasst wird. Die Bedingung einer Erfassung in nur einer einzigen Scanlage wiederum wäre zu schwach, das würde zahlreiche Fehlalarme auslösen. Daher wird eine sicherheitsgerichtete Reaktion bei Feststellung der Anwesenheit eines Objekts in mindestens zwei Scanlagen ausgelöst, wobei wie gesagt die Untergrenze höher liegen kann als zwei. Die Anzahl Scanlagen, in denen simultan Objekte erfasst sein müssen, damit eine sicherheitsgerichtete Reaktion ausgelöst wird, kann mit dem Abstand von "alle" bis zur ersten sicheren Reichweite bis "zwei" (oder mehr) in der zweiten sicheren Reichweite abnehmen. Jenseits der zweiten sicheren Reichweite ist eine Absicherung durch den Sensor nicht mehr gewährleistet.

Die Steuer- und Auswertungseinheit ist bevorzugt für eine Schutzfeldauswertung ausgebildet, bei der ein Objekt nur sicherheitsrelevant ist, wenn dessen Position in einem konfigurierten Schutzfeld liegt. Innerhalb der einzelnen Scanlagen findet somit eine klassische Schutzfeldauswertung statt. Dabei kann auf bewährte vorhandene Vorgehensweisen, Algorithmen und Softwarebausteine herkömmlicher Einlagenscanner zurückgegriffen werden. Schutzfelder sind geometrische Formen, mit denen Teile der Scanlage als sicherheitsrelevant konfiguriert werden. Nicht jede Objekterfassung in einem Schutzfeld muss automatisch ein sicherheitsrelevanter Schutzfeldeingriff sein. Es können Mindestgrößen und -dauern von Objekteingriffen gefordert werden, beispielsweise die wiederholte Erfassung in m aus n Scans, und es kann auch im Schutzfeld zulässige Objekte beziehungsweise deaktivierte Teilbereich geben (Muting, Blanking). Die einleitend genannte EP 3 220 164 B1 stellt ebenfalls geeignete Filter für eine Schutzfeldauswertung vor. Schutzfelder werden vorzugsweise in übereinander liegenden Scanlagen in gleicher Form konfiguriert, wobei abweichend auch eine 3D-Form von Schutzfeldern durch unterschiedliche Geometrien über die Scanlagen hinweg denkbar sind, einschließlich der Definition von Schutzfeldern nur in einigen und nicht allen Scanlagen. Nach der Schutzfeldauswertung ist bekannt, in welchen Scanlagen und vorzugsweise auch Winkelpositionen die Anwesenheit eines sicherheitsrelevanten Objekts festgestellt wurde, und es schließt sich die übergreifende Auswertung über Scanlagen hinweg an, um gegebenenfalls eine sicherheitsgerichtete Reaktion auszulösen.

Vorzugsweise wird pulsbasiert gemessen, dazu mit dem Lichtstrahl ein Sendepuls ausgesandt und aus dem remittierten Lichtstrahl ein entsprechender Empfangspuls erzeugt. Die Steuer- und Auswertungseinheit ist bevorzugt dafür ausgebildet, nacheinander mehrere Sendelichtpulse auszusenden, die entsprechenden Empfangspulse mit mindestens einer Schwelle abzutasten und in einem Histogramm zu akkumulieren und die Lichtlaufzeit aus dem Histogramm zu bestimmen. Diese Ausführungsform arbeitet also mit einem Mehrpulsverfahren wie in der einleitend genannten EP 2 469 296 B1.

Die Steuer- und Auswertungseinheit ist dafür ausgebildet, anhand der untersten Scanlage oder mehrerer unterer Scanlagen die Lage und/oder Orientierung des Bodens zu erfassen. Der Sensor wird vorzugsweise so installiert, dass zumindest die unterste Scanlage noch innerhalb der Reichweite den Boden trifft. Im Idealfall beschreibt der Scanstrahl der untersten Scanlage einen Kreis auf dem Boden oder misst umgekehrt überall einen konstanten Abstand. Abweichungen von diesem Idealfall lassen auf eine geneigte Montage des Sensors oder eine Neigung beziehungsweise Unebenheit des Bodens schließen. Der Sensor macht sich mit diesen Gegebenheiten bekannt, vorzugsweise in einer Einlernphase, insbesondere bei der Inbetriebnahme nach Montage, gerade in mobilen Anwendungen aber auch während des Betriebs. Gegebenenfalls können Ausrichtung und/oder Montagehöhe des Sensors nachjustiert werden. In Kenntnis des Bodens ist dann für den weiteren Betrieb insbesondere klar, welche Scanlage in jedem Abstand die unterste ist, die nicht den Boden trifft, und die für die Erkennung liegender Personen herangezogen werden kann.

Die Steuer- und Auswertungseinheit ist bevorzugt dafür ausgebildet, für die Feststellung der Anwesenheit eines sicherheitsrelevanten Objekts nur Objekte bis zu einer Mindesthöhe über dem Boden einzubeziehen. Die Mindesthöhe entspricht einer Untergrenze für die Körpergröße von Personen, die noch sicher erfasst werden sollen. Es wäre nicht sinnvoll, die Erfassung noch beispielsweise in 2 m Höhe zu verlangen, weil die meisten Personen so groß nicht sind. Einige Scanlagen können aber solche Höhen insbesondere in größeren Abständen erreichen, und deren Erfassungen sollten dann bei der Entscheidung ignoriert werden, ob eine sicherheitsgerichtete Reaktion auszulösen ist.

Die Steuer- und Auswertungseinheit ist bevorzugt dafür ausgebildet, je nach (erfasstem) Abstand und Scanlage eine Höhe über dem Boden zu bestimmen. Das lässt sich aus dem eingelernten Boden und der durch Sensoreigenschaften festgelegten Lage der Scanlagen bezüglich des Sensors berechnen. Der damit bekannte Elevationswinkel der Scanlage wird vorzugsweise dafür genutzt, für einen jeweiligen Abstand zum Sensor zu bestimmen, welche Scanlage die unterste Scanlage oberhalb des Bodens ist und/oder welche Scanlagen höher verlaufen als eine Mindesthöhe einer Person, die dann vorzugsweise für die Bewertung ignoriert werden, ob eine sicherheitsgerichtete Reaktion ausgelöst wird.

Die Scanlagen weisen bevorzugt zumindest in Bodennähe zueinander eine Winkelauflösung auf, so dass benachbarte Scanlagen in maximaler Reichweite höchstens einen Abstand entsprechend einem zu detektierenden Objekt einer Mindestgröße aufweisen, insbesondere gemäß der Vorschrift arctan(Mindestgröße/Reichweite). Die maximale Reichweite ist insbesondere die oben definierte zweite sichere Reichweite. Die Scanlagen bilden einen vertikalen Fächer, und somit erhöht sich der vertikale Abstand zwischen zwei Scanlagen mit zunehmendem Abstand zum Sensor. Ein Objekt einer Mindestgröße, beispielsweise ein menschlicher Körper, soll aber auch bei der maximalen Reichweite noch sicher erfasst werden. Dazu darf die Winkelspreizung zwischen den Scanlagen nicht zu groß werden. Allgemein lässt sich dies mit der Formel arctan(Minimalgröße/Reichweite) berechnen. Die Anforderung besteht in erster Linie direkt über dem Boden, da eine Person nicht zwischen zwei höheren Scanlagen schweben könnte, selbst wenn dort die Winkelspreizung größer wäre. Die Mindestgröße bezieht sich hier auf die Höhendimension beziehungsweise Elevation, die Objekterfassung innerhalb einer einzelnen Scanlagen hängt von anderen Größen ab als der Winkelspreizung zwischen den Scanlagen. Zwischen je zwei Scanlagen kann der gleiche oder ein unterschiedlicher Winkel liegen, die Auflösung der Abtastung in Elevation ist dementsprechend gleichmäßig oder ungleichmäßig.

Der Sensor ist bevorzugt als Sicherheitssensor, insbesondere Sicherheitslaserscanner, im Sinne einer Sicherheitsnorm für Maschinensicherheit oder berührungslos wirkende Schutzeinrichtungen ausgebildet und weist insbesondere einen Sicherheitsausgang für die Ausgabe eines sicherheitsgerichteten Absicherungssignals auf. Ein Sicherheitssensor oder Sicherheits(laser)scanner ist ein sicherer Sensor beziehungsweise sicherer Laserscanner im Sinne einer Sicherheitsnorm und darf deshalb zum Personenschutz an Gefahrenquellen eingesetzt werden. Einleitend sind beispielhaft einige heute gültige einschlägige Sicherheitsnormen genannt, die sich regional und zukünftig in ihrer konkreten Formulierung, nicht aber ihrem grundsätzlichen Ansatz der Fehlervermeidung beziehungsweise rechtzeitigen Fehleraufdeckung zur Vermeidung von Unfällen durch Defekte oder sonstiges unerwartetes Verhalten unterscheiden. Wird entschieden, dass eine sicherheitsgerichtete Reaktion auszulösen ist, oder kann der Sensor eigene Funktionsfähigkeit nicht gewährleisten, so kann dies einer überwachten Maschine oder einer zwischengeschalteten Sicherheitssteuerung an dem Sicherheitsausgang signalisiert werden, insbesondere einem OSSD (Output Signal Switching Device). Dieser Sicherheitsausgang ist als Teil der normausfüllenden Maßnahmen sicher, etwa zweikanalig ausgeführt, und dient erforderlichenfalls zur Einleitung einer sicherheitsgerichteten Maßnahme wie einem Notaus oder etwas allgemeiner dem Herstellen eines sicheren Zustands.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Mehrlagenscanners;
- Fig. 2: eine schematische Darstellung der von einem Mehrlagenscanner überwachten Scanlagen;
- Fig. 3: eine schematische Darstellung der Erfassung einer liegenden Person durch einen Mehrlagenscanner;
- Fig. 4: eine schematische Darstellung der Erfassung einer Person innerhalb einer ersten sicheren Reichweite;
- Fig. 5: eine schematische Darstellung der Erfassung einer Person jenseits der ersten sicheren Reichweite und innerhalb einer zweiten sicheren Reichweite;
- Fig. 6: eine Tabelle zur Veranschaulichung einer Kohärenzbedingung einer Erfassung desselben Objekts in mehreren Scanlagen;
- Fig. 7: eine schematische Darstellung der Erfassung des Bodens mit einer untersten Scanlage;
- Fig. 8: eine schematische Darstellung der Erfassung des Bodens ähnlich Figur 7 nun mit geneigtem Boden;
- Fig. 9: eine schematische Darstellung der Erfassung des Bodens ähnlich Figur 7 nun mit den beiden untersten Scanlagen; und
- Fig. 10: eine schematische Darstellung der Erfassung des Bodens ähnlich Figur 7 nun mit den beiden untersten Scanlagen und bei geneigtem Boden.

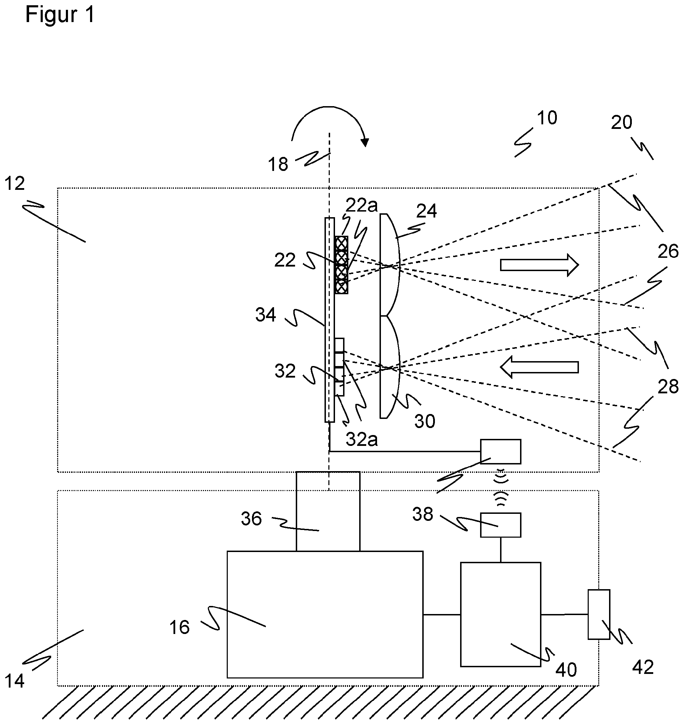

Figur 1 zeigt eine schematische Schnittdarstellung durch einen optoelektronischen Sensor 10 in einer Ausführungsform als Laserscanner, insbesondere Mehrlagenscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit mehreren Lichtquellen 22a, beispielsweise LEDs oder Laser in Form von Kantenemittern oder VCSELs, mit Hilfe einer Sendeoptik 24 mehrere Sendelichtstrahlen 26 mit gegenseitigem Winkelversatz, die in den Überwachungsbereich 20 ausgesandt werden. Anstelle mehrerer Lichtquellen 22a ist auch eine Strahlteilung denkbar, die das Licht einer einzigen oder mehrere Lichtquellen in Sendelichtstrahlen 26 aufteilt. Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode). Statt einer gemeinsamen Linse als Sendeoptik 24 beziehungsweise Empfangsoptik 30 können andere optische Elemente eingesetzt werden, beispielsweise Anordnungen von Mikrolinsen.

Die rein beispielhaft vier Lichtquellen 22a und Lichtempfangselemente 32a sind übereinander dargestellt. Sie können stattdessen ein Muster in die Papierebene hinein beziehungsweise aus der Papierebene heraus bilden, beispielsweise auf einer Kreislinie angeordnet sein. Lichtsender 22 und Lichtempfänger 32 sind in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Abtasteinheit 12 mit der ruhenden Sockeleinheit 14. Dort befindet sich eine Steuer- und Auswertungseinheit 40, die zumindest teilweise auch auf der Leiterkarte 34 oder an anderem Ort in der Abtasteinheit 12 untergebracht sein kann. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Für einen ersten Teil der Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtast- oder Scanlage zur Verfügung. Die jeweilige Scanlage ist über die Identität des jeweiligen remittierten Lichtstrahls 28 und dessen Erfassung in einem der Lichtempfangselemente 32a ebenfalls bekannt, so dass insgesamt ein dreidimensionaler Raumbereich mit mehreren Scanlagen abgetastet wird.

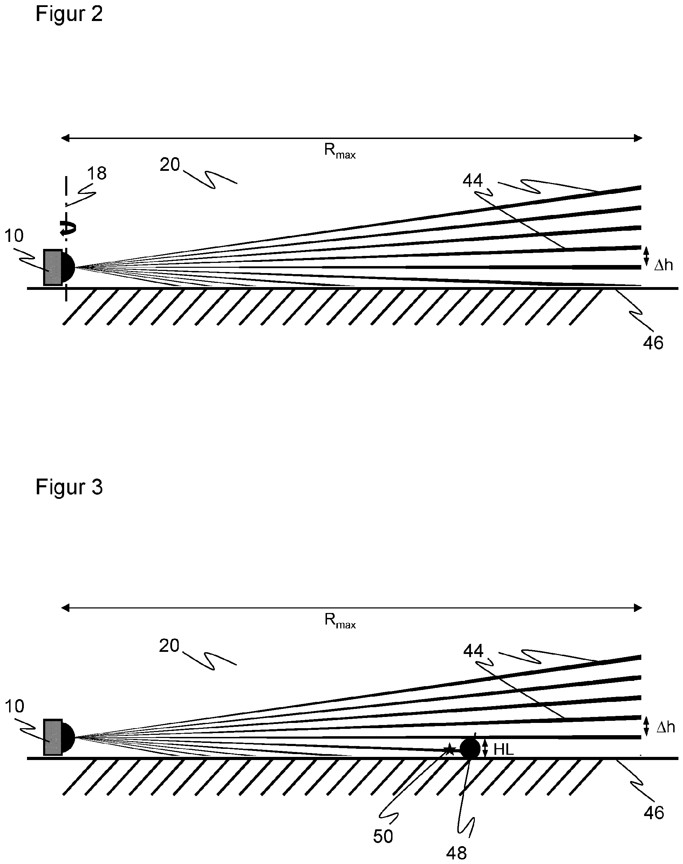

Der Sensor 10 ist als Sicherheitssensor für einen Einsatz in der Sicherheitstechnik zur Überwachung einer Gefahrenquelle ausgebildet, wie sie beispielsweise eine gefährliche Maschine darstellt. Der Sensor 10 ist dementsprechend sicher ausgelegt, um die einleitend erläuterten Anforderungen der Sicherheitsnormen entsprechend seinem Sicherheitsniveau (beispielsweise SIL, Safety Integrity Level, oder PL, Performance Level) zu erfüllen. Es wird beispielsweise ein vorab konfiguriertes Schutzfeld überwacht, das während des Betriebs der Maschine vom Bedienpersonal nicht betreten werden darf. Das Schutzfeld ist jeweils in einer Scanlage, in mehreren Scanlagen oder über alle Scanlagen hinweg konfiguriert und hat je Scanlage die gleiche oder eine unterschiedliche geometrische Form. Wie die Steuer- und Auswertungseinheit 40 Schutzfeldeingriffe in einzelnen Scanlagen über die Scanlagen hinweg gemeinsam bewertet, um eine mögliche Gefahr zu erkennen, wird später unter Bezugnahme auf die Figuren 2 bis 10 genauer erläutert. Wenn diese Auswertung zu dem Schluss kommt, dass eine sicherheitsgerichtete Reaktion erfolgen muss, so wird ein entsprechendes sicherheitsgerichtetes Signal an einem Ausgang 42 ausgegeben (OSSD, Output Signal Switching Device).

Der dargestellte Sensor 10 ist ein Laserscanner mit rotierendem Messkopf, nämlich der Abtasteinheit 12. Alternativ ist auch eine periodische Ablenkung mittels Drehspiegel oder einem Facettenspiegelrad denkbar. Bei mehreren Sendelichtstrahlen 26 hat das den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her. Weiterhin kann die Scanbewegung zur Erzeugung der Scanlage stattdessen auch mit anderen bekannten Methoden erzeugt werden, beispielsweise MEMS-Spiegeln, optical phased arrays oder akusto-optischen Modulatoren, insbesondere bei Ausführungsformen, in denen eine Lichtquelle mehrere Sendepunkte erzeugt.

Während der Rotation des Sensors 10 wird durch jeden der Sendelichtstrahlen 26 jeweils eine Fläche abgetastet. Nur bei einem Elevationswinkel von 0°, also einem in Figur 1 nicht vorhandenen horizontalen Sendelichtstrahl, wird dabei eine Ebene des Überwachungsbereichs 20 im geometrischen Sinne abgetastet. Die übrigen Sendelichtstrahlen 26 tasten genaugenommen die Mantelfläche eines Kegels ab, der je nach Elevationswinkel unterschiedlich spitz ausgebildet ist. Bei mehreren Sendelichtstrahlen 26, die in unterschiedlichen Winkeln nach oben und unten ausgesandt werden, entsteht insgesamt als Abtastgebilde eine Art Schachtelung von mehreren Sanduhren. Auf diese geometrischen Feinheiten wird nicht weiter eingegangen, der jeweilige Abtastbereich eines Sendelichtstrahls 26 wird vereinfachend als Scanlage behandelt, was nach dem Gesagten grob, aber nicht geometrisch einer exakten Scanebene entspricht.

Figur 2 zeigt schematisch die Scanlagen 44 eines horizontal montierten Sensors 10 in einer Schnittdarstellung. Horizontal bedeutet, dass die Scanlagen 44 im Großen und Ganzen parallel zum Boden 46 verlaufen, wobei exakte Parallelität wegen der fächerartigen Anordnung der Scanlagen 44 nicht erfüllbar ist. Der Sensor 10 hat eine maximale Reichweite Rₘₐₓ, bis zu der Objekte noch sicher erfasst werden und Schutzfelder konfiguriert werden können. Eine Person im Überwachungsbereich 20 sollte in mehreren Scanlagen 44 erfasst werden. Deshalb sollten die Scanlagen 44 auch in maximaler Reichweite nicht zu weit aufgespreizt sein. Daraus ergibt sich eine erforderliche Vertikalauflösung Δh, die den Abstand der Scanlagen 44 in Höhen- oder Elevationsrichtung bezeichnet, wobei die Spreizung zwischen je zwei Scanlagen 44 gleich, aber auch unterschiedlich groß sein kann. Die Vertikalauflösung Δh hängt wegen der auseinanderlaufenden Scanlagen 44 unterschiedlicher Neigung vom Abstand ab, hier wird auf den Abstand entsprechend der maximalen Reichweite Rₘₐₓ Bezug genommen.

Es muss noch der Sonderfall einer auf dem Boden liegenden Person berücksichtigt werden, die unter Umständen nur von einer einzigen Scanlage 44 erfasst wird. Daraus ergibt sich, dass die Vertikalauflösung Δh zumindest in Bodennähe feiner sein muss als eine Mindesthöhe HL einer liegenden Person. In einer bevorzugten Ausführungsform ist die Spreizung der Scanlagen 44 gleichmäßig und beträgt höchstens arctan (Mindesthöhe HL/maximale Reichweite Rₘₐₓ). In einem Zahlenbeispiel mit maximaler Reichweite Rₘₐₓ=10 m und Mindesthöhe HL=200 mm ergibt sich eine maximale vertikale Spreizung der Scanlagen 44 von arctan (200 mm / 10 m) = 1.15°.

Figur 3 illustriert den Sonderfall einer auf dem Boden liegenden Person 48, die als Kugel mit 200 mm Durchmesser modelliert wird. Das berücksichtigt die erläuterte Mindesthöhe HL ebenso wie den ungünstigsten Fall der Ausdehnung in horizontaler Richtung, wenn die Person 48 beispielsweise mit dem Kopf oder den Füßen voran zum Sensor 10 ausgerichtet liegt oder Kleidung trägt, die nur teilweise eine ausreichende Reflektivität besitzt.

Für die Auswertung, ob eine Gefahrenlage besteht, derentwegen der Sensor 10 eine sicherheitsgerichtete Reaktion auslösen sollte, werden zunächst die Scanlagen 44 einzeln für sich ausgewertet, beispielsweise mit einer herkömmlichen Schutzfeldauswertung eines Einlagensensors. Dabei können alle bewährten Vorgehensweisen und Filter eingesetzt werden, die kleine beziehungsweise transiente Störobjekte als nicht sicherheitsrelevant ignorieren oder gewisse bekannte Objekte zulassen.

Die liegende Person 48 in Figur 3 wird nur in der untersten Scanlage 44 über dem Boden 46 als sicherheitsrelevantes Objekt erfasst und löst eine entsprechende Objekterkennung 50 aus, wobei diese Objekterkennung 50 bereits bedeutet, dass innerhalb der betroffenen Scanlage 44 alle Bedingungen für ein signifikantes Ereignis erfüllt sind, also insbesondere ein Schutzfeld in sicherheitsrelevanter Weise verletzt ist. Ein Einlagenscanner würde in vergleichbarer Situation sicherheitsgerichtet reagieren. Bei einem Mehrlagenscanner folgt zunächst noch eine übergeordnete Auswertung über die Objekterkennungen 50 der einzelnen Scanlagen 44 hinweg. Eine liegende Person 48 stellt hier einen Sonderfall dar, denn sie wird womöglich nur ein einziges Mal erfasst. Um diesen Sonderfall abzudecken, löst der Sensor 10 bei einer Objekterkennung 50 in der untersten Scanlage 44 über dem Boden 46 eine sicherheitsgerichtete Reaktion aus.

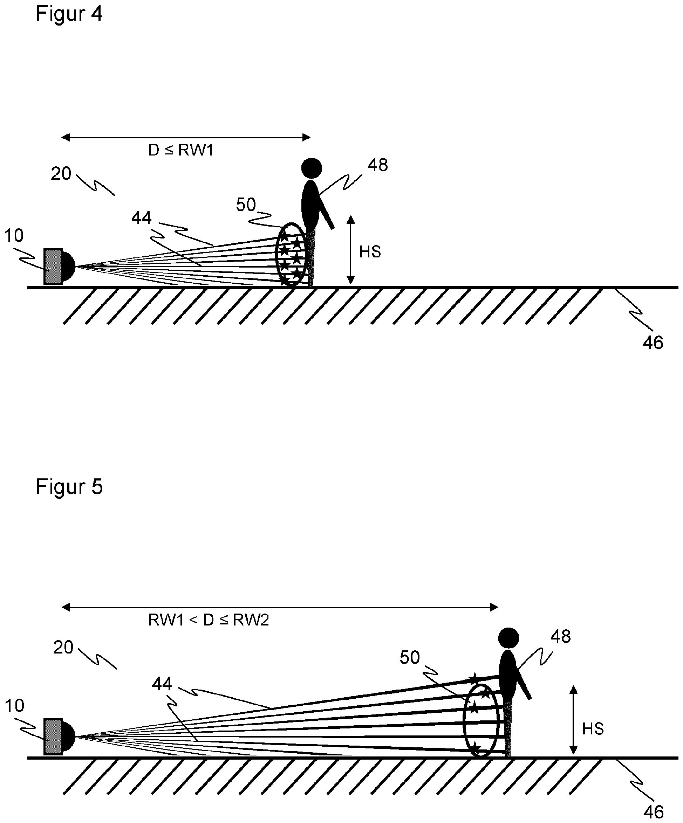

Die Figuren 4 und 5 illustrieren den Normalfall einer stehenden Person 48. Dabei gibt HS eine Maximalhöhe an, bis zu der eine Objekterkennung 50 erwartet wird. Da die Person 48 in ungünstiger Körperhaltung stehen kann, etwa gebückt, ist eine beispielhafte sinnvolle Vorgabe für die Maximalhöhe HS = 1 m.

Neben dem bereits zu Figur 3 diskutierten Sonderfall einer liegenden Person 48 werden in den Figuren 4 und 5 noch zwei weitere Fälle unterschiedlicher Abstände D der Person 48 zu dem Sensor 10 unterschieden. Für Einlagenscanner ist die minimale Reflektivität R1 zur sicheren Erfassung eines Objektes in der Produktnorm IEC 61496-3 mit 1,8 % definiert. Es darf aber angenommen werden, dass keine Person 48 vollständig in tiefschwarze Samtkleidung gehüllt ist. Deshalb kann wenigstens für einige von mehreren Scanlagen 44 eine Erfassung auch bei höherer Reflektivität R2 > R1 beispielsweise von mindestens 6 % erwartet werden. Es gibt demnach Grenzreichweiten oder eine erste sichere Reichweite RW1 und eine zweite sichere Reichweite RW2 entsprechend den Reflektivitäten R1, R2 mit RW1 < RW2, bis zu denen Objekte mit entsprechender Reflektivität zuverlässig erfasst werden. Die Beziehung ist nichtlinear, da die Empfindlichkeit der Erfassung mit zunehmendem Abstand D quadratisch abnimmt. In einem Zahlenbeispiel sei eine erste sichere Reichweite RW1 = 5,5 m für eine Reflektivität R1 = 1,8% angenommen. Für die zweite sichere Reichweite RW2 kann dann bei R2 = 6% ein Wert von RW2 = Sqrt(6% / 1,8%) * 5,5 m = 10 m abgeschätzt werden.

Nach diesen Vorüberlegungen zeigt Figur 4 nun zunächst den Fall einer Person 48 in einem Abstand D höchstens gleich der ersten sicheren Reichweite RW1. Gemäß Definition der ersten sicheren Reichweite RW1 ist der Sensor 10 in diesen Abständen D so empfindlich, dass es in sämtlichen Scanlagen zu einer relevanten Objekterkennung 50 kommt, sofern die sonstigen Bedingungen für Sicherheitsrelevanz wie beispielsweise eine Position der Person 48 innerhalb eines Schutzfeldes erfüllt sind. Es ist in diesen Abständen D ausgeschlossen, dass eine Person 48 beispielsweise wegen dunkler Kleidung übersehen wird. Deshalb wird für einen Abstand D bis hin zur ersten sicheren Reichweite RW1 eine sicherheitsgerichtete Reaktion genau bei einer relevanten Objekterkennung 50 in allen Scanlagen 44 ausgelöst.

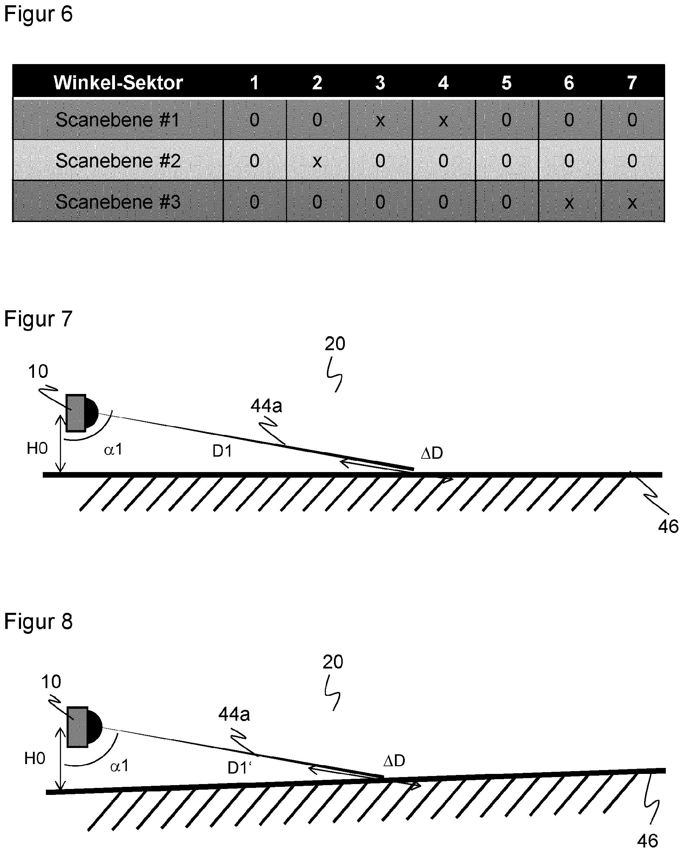

Prinzipiell wäre noch denkbar, dass im Abstand D eine Scanlage 44 über die Person 48 hinüberstreicht und sie deshalb verfehlt. Solche Scanlagen 44 oberhalb der Maximalhöhe HS im Abstand D werden vorzugsweise ignoriert. Umgekehrt treffen womöglich die untersten Scanlagen 44 den Boden schon vor dem Abstand D. Diese zu hohen und zu tiefen Scanlagen 44 sind ausdrücklich nicht gemeint, wenn die Bedingung gestellt wird, dass es in allen Scanlagen 44 eine relevante Objekterkennung 50 geben soll. Eine weitere bisher unbeachtete vorteilhafte Zusatzbedingung fordert, dass die Person 48 über die Scanlagen 44 hinweg in gleichen oder zumindest ähnlichen Winkelpositionen erfasst wird. Diese Kohärenzbedingung wird später unter Bezugnahme auf die Figur 6 näher betrachtet.

Figur 5 zeigt den Fall einer Person in einem Abstand D zwischen der ersten sicheren Reichweite RW1 und der zweiten sicheren Reichweite RW2. Hier ist nun nicht mehr garantiert, dass sämtliche Scanlagen 44 eine relevante Objekterkennung 50 liefern. In der Illustration der Figur 5 trägt die Person beispielhaft eine dunkle Hose, deren Reflektivität kleiner ist als R2. Das würde noch für eine Reflektivität R1 und damit eine Detektion innerhalb der ersten sicheren Reichweite RW1 genügen, nicht aber für eine Detektion jenseits der ersten sicheren Reichweite RW1. Zumindest Teile der Person 48 weisen jedoch eine ausreichende Reflektivität R2 auf, so dass es in mehreren Scanlagen 44 zu einer relevanten Objekterkennung 50 kommt. Aus diesen Gründen wird die Bedingung für das Auslösen einer sicherheitsgerichteten Reaktion im Abstandsbereich RW1 ≤ D ≤ RW2 abgeschwächt und nur noch eine relevante Objekterkennung 50 für mindestens zwei Scanlagen 44 gefordert. Vorzugsweise muss es sich dabei zudem um benachbarte Scanlagen 44 handeln. Die Ausführungen zu Figur 4 zu einem Ignorieren zu hoher und zu tiefer Scanlagen 44 gelten auch hier, dies tritt sogar noch mit größerer Wahrscheinlichkeit auf, weil sich die Scanlagen 44 mit zunehmendem Abstand D weiter auffächern.

Die Figuren 4 und 5 zeigen eine scharfe Fallunterscheidung mit der Forderung nach einer relevanten Objekterkennung 50 in allen Scanlagen 44 bis zur ersten sicheren Reichweite RW1 beziehungsweise mindestens zwei Scanlagen 44 zwischen der ersten sicheren Reichweite RW1 und der zweiten sicheren Reichweite RW2. Es sind feinere Abstufungen denkbar, in denen die geforderte Anzahl mit wachsendem Abstand D jenseits der ersten sicheren Reichweite RW1 abnimmt.

Es sei noch angemerkt, dass die liegende Person 48 gemäß Figur 3 zwar in vertikaler Richtung nur von einer einzigen Scanlage 44 erfasst wird. Dabei ist aber die Annahme berechtigt, dass sich über den horizontal abgetasteten liegenden Körper mindestens eine Stelle findet, die mindestens eine Reflektivität R2 aufweist. Für die liegende Person 48 ist daher eine Fallunterscheidung zwischen erster sicherer Reichweite RW1 und zweiter sicherer Reichweite RW2 nicht erforderlich.

Figur 6 ist eine Tabelle zur Illustration einer vorteilhaften bereits angesprochenen zusätzlichen Kohärenzbedingung. Die relevanten Objekterkennungen 50 sollen demselben Objekt zuzuordnen sein. Das lässt sich über ähnliche Winkelpositionen beziehungsweise Scan- oder Azimutwinkel der relevanten Objekterkennungen 50 prüfen. Die gezeigte Tabelle enthält in ihren Spalten vereinfachend lediglich sieben Winkelsektoren, in der Praxis können bei einer typischen Winkelauflösung unter einem Grad und einem Sichtwinkel von beispielsweise 270° deutlich mehr Winkelsektoren unterschieden werden, wobei relevante Objekterkennungen 50 die unterliegende physische Auflösung nicht ausreizen müssen. In den Zeilen sind beispielhaft drei Scanlagen 44 aufgeführt, auch hier liegen praktische Werte höher, beispielsweise bei vier, acht, zehn, sechzehn oder einer anderen oder höheren Anzahl Scanlagen 44. Die Scanlagen 44 sind einheitlich in Winkelsektoren gerastert. Relevante Objekterkennungen sind mit einem x gekennzeichnet, eine 0 steht für keine oder nach entsprechenden Filterungen keine sicherheitsrelevante Objekterfassung.

Die Kohärenzbedingung soll vorzugsweise nur dann als erfüllt angesehen werden, wenn sich die Winkelsektoren der relevanten Objekterkennungen 50 überlappen oder direkt benachbart sind beziehungsweise aneinandergrenzen. Im Beispiel der Figur 6 ist das für die Scanlagen #1 und die Scanlage #2 über die Spalten 2-4 gegeben. Die übrigen Scanlagenpaare erfüllen die Kohärenzbedingung hingegen nicht.

Eine Überprüfung einer Kohärenzbedingung lediglich anhand von Winkelsektoren ist besonders ressourcenschonend. Es sind komplexere Verfahren denkbar, die beispielsweise auch den Abstand D der jeweiligen relevanten Objekterkennung 50 einbeziehen.

Anhand der Figuren 7 bis 10 wird nun eine Bodenerkennung des Sensors 10 erläutert. Wissen um die Lage des Bodens 46 ist beispielsweise nützlich, um für den Sonderfall gemäß Figur 3 einer liegenden Person 48 zu entscheiden, welches die untersten Scanlagen 44 oberhalb des Bodens 46 sind oder welche Scanlagen 44 in einem Abstand D bereits den Boden 46 getroffen haben beziehungsweise über die Mindesthöhe HL hinüberstreichen. Allgemein lässt sich die Höhe H einer Objekterkennung 50 im Abstand D bestimmen.

Figur 7 zeigt zunächst den Fall eines ebenen Bodens 46 beziehungsweise eines korrekt horizontal ausgerichteten Sensors 10. Der Sensor 10 ist in einer Höhe H0 über dem Boden 46 montiert. Die unterste Scanlage 44a ist in einem Winkel α1 zum Boden 46 hin gerichtet und trifft vorzugsweise den Boden 46 in allen Azimutwinkeln. Dabei sollte der Auftreffwinkel nicht zu flach werden, damit insbesondere bei glänzendem Boden 46 noch ausreichend Signal zurückkommt. Die Ausrichtung des Bodens 46 wird beispielsweise in einer Einlern- oder Kalibrierphase bei der Inbetriebnahme des Sensors 10 anhand der Messwerte der untersten Scanlage 44a analysiert. Unter Idealbedingungen wie in Figur 7 sollte über alle Azimutwinkel derselbe Abstand D1 zum Boden 46 gemessen werden. Eine Abweichung außerhalb eines Toleranzbereichs ΔD bedeutet, dass die Sicht in der untersten Scanlage 44a auf den Boden 46 von einem Objekt verdeckt ist oder eine Bodenstruktur vorliegt, beispielsweise ein Loch im Boden 46. Um nahe Objekte verlässlich zu detektieren, sollte letzterer Fall ausgeschlossen werden, indem für den Boden 46 ein Maximalwert für Unebenheiten vorgegeben wird.

Figur 8 zeigt eine Vergleichssituation mit geneigtem Boden 46 und/oder geneigter Montage des Sensors 10. Bei bekannter Einbauhöhe H0 kann diese Neigung anhand der Messungen der Abstände D1' in jede Scan-Winkelrichtung bestimmt werden.

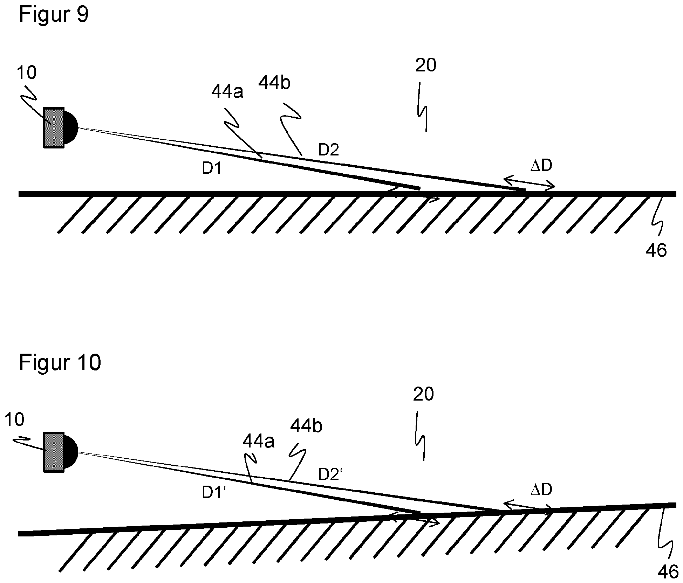

Die Figuren 9 und 10 illustrieren in analoger Weise die Erfassung des Bodens 46 mit mindestens zwei der unteren Scanlagen 44a-b bei geradem Boden 46 beziehungsweise im Falle einer Neigung. Es werden dann jeweils zwei Abstände D1', D2' erfasst, die eine noch differenziertere Analyse des Bodens 46 ermöglichen. Sollen komplexere Bodenstrukturen erfasst werden, wie Bordsteine, Rampen, Abbruchkanten, gekrümmte Böden und dergleichen, so kann ein komplexerer Algorithmus zur Bodenerkennung eingesetzt werden, der möglicherweise noch mehr Scanlagen 44 einbezieht. In mobilen Anwendungen ändert sich die Ausrichtung des Sensors 10 zum Boden 46 während des Betriebs, so dass dann vorzugsweise der Boden 46 und dessen Ausrichtung regelmäßig überwacht wird.

Mit diesem Wissen über die Anbauhöhe H0, dem qua Konstruktion des Sensors 10 bekannten Elevations-Winkel der jeweiligen Scanlage 44 und der Höhe und Neigung des Bodens 46 in die jeweilige Scanrichtung kann die Höhe eines erfassten Objekts für dessen jeweiligen Objektabstand D bestimmt werden. Dies soll abschließend mit einem Zahlenbeispiel illustriert werden. Das optische Zentrum des Sensors 10 soll den Koordinatenursprung bilden. Die Scanlagen 44 weisen zueinander einen jeweiligen Spreizwinkel von 1° auf, wobei die achte Scanlage horizontal verläuft. Der Sensor 10 sei auf einer bekannten Anbauhöhe H0 = 200 mm montiert. Bei der Erfassung des Bodens 46 sei mit der untersten Scanlage 44a für einen Azimutwinkel von rein beispielhaft 90° ein Abstand D1 = 1754 mm gemessen worden. Die unterste (erste) Scanlage 44a ist um 7° nach unten, nämlich sieben Mal um 1° gegen die horizontale achte Scanlage verkippt. Daraus ergibt sich durch elementare trigonometrische Überlegungen, dass der Boden 46 bezogen auf das Koordinatensystem des Sensors 10 im Azimutwinkel 90° um -0,5° geneigt ist. Nun wird von der zehnten Scanlage im Azimutwinkel 90° ein Objekt im Abstand von 5 m erfasst. Die zehnte Scanlage ist um 2° nach oben, nämlich zweimal um 1° gegen die horizontale achte Scanlage verkippt. Zu berücksichtigen sind noch die -0,5°-Neigung des Bodens 46 sowie die Anbauhöhe H0 = 200 mm. Dann ergibt sich in guter Näherung eine Höhe von sin(2° + 0.5°) * 5.000 mm + 200 mm = 418 mm.

## Patentansprüche

1. Optoelektronischer Sensor (10), insbesondere Laserscanner, zur Erfassung von Objekten (48) in einem Überwachungsbereich (20), der mindestens einen Lichtsender (22) zum Aussenden mehrerer voneinander separierter Lichtstrahlen (26), mindestens einen Lichtempfänger (32) zum Erzeugen eines jeweiligen Empfangssignals aus den im Überwachungsbereich (20) remittierten Lichtstrahlen (28), eine bewegliche Ablenkeinheit (12), mit deren Hilfe die ausgesandten Lichtstrahlen (26) periodisch durch den Überwachungsbereich (20) geführt werden, um im Verlauf der Bewegung der Abtasteinheit (12) mit den separierten Lichtstrahlen (26) jeweils eine Scanlage (44) abzutasten, und eine Steuer- und Auswertungseinheit (40) aufweist, die dafür ausgebildet ist, aus dem jeweiligen Empfangssignal Informationen über die Objekte (48) in dem Überwachungsbereich (20) zu gewinnen, insbesondere einen Abstand mittels eines Lichtlaufzeitverfahrens zu messen, wobei die Steuer- und Auswertungseinheit weiterhin dafür ausgebildet ist, je Scanlage (44) die Anwesenheit eines sicherheitsrelevanten Objekts (48, 50) festzustellen und durch gemeinsame Bewertung der je Scanlage (44) festgestellten Anwesenheit eines sicherheitsrelevanten Objekts (48, 50) zu entscheiden, ob eine sicherheitsgerichtete Reaktion ausgelöst wird, wobei zur Erhöhung der Robustheit zum Auslösen einer sicherheitsgerichteten Reaktion eine festgestellte Anwesenheit von sicherheitsrelevanten Objekten (48, 50) über mehrere Scanlagen (44) verlangt wird, wobei ausnahmsweise zur Erkennung von liegenden Personen die festgestellte Anwesenheit eines sicherheitsrelevanten Objekts nur in einer untersten Scanlage oberhalb des Bodens (46) ausreicht.

2. Sensor (10) nach Anspruch 1,
wobei die Steuer- und Auswertungseinheit (40) dafür ausgebildet ist, die Anwesenheit eines Objekts (48, 50) in mehreren Scanlagen (44) festzustellen, wenn die Anwesenheit in den Scanlagen (44) in gleichen oder benachbarten Winkelstellungen festgestellt wird.

3. Sensor (10) nach einem der vorhergehenden Ansprüche,
wobei die Steuer- und Auswertungseinheit (40) dafür ausgebildet ist, eine sicherheitsgerichtete Reaktion bei Feststellung der Anwesenheit eines Objekts (48, 50) in einer Anzahl Scanlagen (44) auszulösen, die bei einem nahen Objekt (48) größer ist als bei einem fernen Objekt (48).

4. Sensor (10) nach einem der vorhergehenden Ansprüche,
wobei die Steuer- und Auswertungseinheit (40) dafür ausgebildet ist, für Objekte (48) in einem Abstand bis zu einer ersten sicheren Reichweite eine sicherheitsgerichtete Reaktion bei Feststellung der Anwesenheit eines Objekts (48, 50) in allen relevanten Scanlagen (44) auszulösen, wobei die erste sichere Reichweite insbesondere der sicheren Reichweite eines Sicherheitslaserscanners mit nur einer Scanlage entspricht.

5. Sensor (10) nach einem der vorhergehenden Ansprüche,
wobei die Steuer- und Auswertungseinheit (40) dafür ausgebildet ist, für Objekte (48) in einem Abstand jenseits einer ersten sicheren Reichweite bis hin zu einer zweiten sicheren Reichweite eine sicherheitsgerichtete Reaktion bei Feststellung der Anwesenheit eines Objekts (48, 50) in mindestens zwei oder mehr, insbesondere zueinander benachbarten Scanlagen (44) auszulösen.

6. Sensor (10) nach einem der vorhergehenden Ansprüche,
wobei die Steuer- und Auswertungseinheit (40) für eine Schutzfeldauswertung ausgebildet ist, bei der ein Objekt (48) nur sicherheitsrelevant ist, wenn dessen Position in einem konfigurierten Schutzfeld liegt.

7. Sensor (10) nach einem der vorhergehenden Ansprüche,
wobei die Steuer- und Auswertungseinheit (40) dafür ausgebildet ist, anhand der untersten Scanlage (44a) oder mehrerer unterer Scanlagen (44a-b) die Lage und/oder Orientierung des Bodens (46) zu erfassen.

8. Sensor (10) nach einem der vorhergehenden Ansprüche,
wobei die Steuer- und Auswertungseinheit (40) dafür ausgebildet ist, für die Feststellung der Anwesenheit eines sicherheitsrelevanten Objekts (48, 50) nur Objekte (48) bis zu einer Mindesthöhe über dem Boden (46) einzubeziehen.

9. Sensor (10) nach einem der vorhergehenden Ansprüche,
wobei die Steuer- und Auswertungseinheit (40) dafür ausgebildet ist, je nach Abstand und Scanlage (44) eine Höhe über dem Boden (46) zu bestimmen.

10. Sensor (10) nach einem der vorhergehenden Ansprüche,
wobei die Scanlagen (44) zumindest in Bodennähe zueinander eine Winkelauflösung aufweisen, so dass benachbarte Scanlagen (44) in maximaler Reichweite höchstens einen Abstand entsprechend einem zu detektierenden Objekt (48) einer Mindestgröße aufweisen, insbesondere gemäß der Vorschrift arctan(Mindestgröße/Reichweite).

11. Sensor (10) nach einem der vorhergehenden Ansprüche,
der als Sicherheitssensor, insbesondere Sicherheitslaserscanner, im Sinne einer Sicherheitsnorm für Maschinensicherheit oder berührungslos wirkende Schutzeinrichtungen ausgebildet ist und insbesondere einen Sicherheitsausgang (42) für die Ausgabe eines sicherheitsgerichteten Absicherungssignals aufweist.

12. Verfahren zur Erfassung von Objekten (48) in einem Überwachungsbereich (20), bei dem mehrere voneinander separierte Lichtstrahlen (26) ausgesandt und mit Hilfe einer beweglichen Ablenkeinheit (12) periodisch durch den Überwachungsbereich (20) geführt werden, um im Verlauf der Bewegung der Abtasteinheit (12) mit den separierten Lichtstrahlen (26) jeweils eine Scanlage (44) abzutasten, aus den im Überwachungsbereich (20) remittierten Lichtstrahlen (28) ein jeweiliges Empfangssignal erzeugt wird und aus dem jeweiligen Empfangssignal Informationen über die Objekte (48) in dem Überwachungsbereich (20) gewonnen, insbesondere Abstände mittels eines Lichtlaufzeitverfahrens gemessen werden, und je Scanlage (44) die Anwesenheit eines sicherheitsrelevanten Objekts (48, 50) festgestellt und durch gemeinsame Bewertung der je Scanlage (44) festgestellten Anwesenheit eines sicherheitsrelevanten Objekts (48, 50) entschieden wird, ob eine sicherheitsgerichtete Reaktion ausgelöst wird, wobei zur Erhöhung der Robustheit zum Auslösen einer sicherheitsgerichteten Reaktion eine festgestellte Anwesenheit von sicherheitsrelevanten Objekten (48, 50) über mehrere Scanlagen (44) verlangt wird, wobei ausnahmsweise zur Erkennung von liegenden Personen die festgestellte Anwesenheit eines sicherheitsrelevanten Objekts nur in einer untersten Scanlage oberhalb des Bodens (46) ausreicht.

## Claims

1. An optoelectronic sensor (10), in particular laser scanner, for detecting objects (48) in a monitoring area (20), comprising at least one light transmitter (22) for transmitting a plurality of light beams (26) separated from one another, at least one light receiver (32) for generating a respective received signal from the light beams (28) remitted in the monitoring area (20), a movable deflection unit (12) for periodically guiding the transmitted light beams (26) through the monitoring area (20) in order to scan a respective scan layer (44) with the separated light beams (26) in the course of the movement of the scanning unit (12), and a control and evaluation unit (40) configured to obtain information about the objects (48) in the monitoring area (20) from the respective received signal, in particular to measure a distance by means of a light time-of-flight method, the control and evaluation unit (40) being further configured to detect the presence of a safety-relevant object (48, 50) per scan layer (44) and to decide, by jointly evaluating the presence of a safety-relevant object (48, 50) detected per scan layer (44), whether a safety-related reaction is triggered, wherein, in order to increase the robustness, a detected presence of safety-relevant objects (48, 50) over a plurality of scan layers (44) is required for triggering a safety-related reaction, with exceptionally the detected presence of a safety-relevant object (48, 50) only in a lowermost scan layer (44) above the ground (46) being sufficient for detecting lying persons.

2. The sensor (10) according to claim 1,
wherein the control and evaluation unit (40) is configured to detect the presence of an object (48, 50) in a plurality of scan layers (44) when the presence is detected in the scan layers (44) in the same or adjacent angular positions.

3. The sensor (10) according to any of the preceding claims,
wherein the control and evaluation unit (40) is configured to trigger a safety-related response upon detection of the presence of an object (48, 50) in a number of scan layers (44) which is greater for a near object (48) than for a far object (48).

4. The sensor (10) according to any of the preceding claims,
wherein the control and evaluation unit (40) is configured to trigger a safety-related reaction for objects (48) at a distance up to a first safe range upon detection of the presence of an object (48, 50) in all relevant scan layers (44),
wherein in particular the first safe range corresponds to the safe range of a safety laser scanner with only one scan layer.

5. The sensor (10) according to any of the preceding claims,
wherein the control and evaluation unit (40) is configured to trigger a safety-related reaction for objects (48) at a distance beyond a first safe range up to a second safe range upon detection of the presence of an object (48, 50) in at least two or more, in particular mutually adjacent, scan layers (44).

6. The sensor (10) according to any of the preceding claims,
wherein the control and evaluation unit (40) is configured for a protective field evaluation in which an object (48) is only safety-relevant if its position lies in a configured protective field.

7. The sensor (10) according to any of the preceding claims,
wherein the control and evaluation unit (40) is configured to detect the position and/or orientation of the ground (46) by means of the lowermost scan layer (44a) or a plurality of lower scan layers (44a-b).

8. The sensor (10) according to any of the preceding claims,
wherein the control and evaluation unit (40) is configured to include only objects (48) up to a minimum height above the ground (46) for determining the presence of a safety-relevant object (48, 50).

9. The sensor (10) according to any of the preceding claims,
wherein the control and evaluation unit (40) is configured to determine a height above the ground (46) depending on the distance and scan layer (44).

10. The sensor (10) according to any of the preceding claims,
wherein the scan layers (44) have an angular resolution relative to one another at least in the vicinity of the ground so that adjacent scan layers (44) at maximum range have at most a distance corresponding to an object (48) to be detected of a minimum size, in particular in accordance with the rule arctan(minimum size/range).

11. The sensor (10) according to any of the preceding claims,
which is configured as a safety sensor, in particular a safety laser scanner, in the sense of a safety standard for machine safety or electro-sensitive protective equipment and in particular has a safety output (42) for the output of a safety-related safeguarding signal.

12. A method for detecting objects (48) in a monitoring area (20), wherein a plurality of light beams (26) separated from one another are transmitted and guided periodically through the monitoring area (20) with the aid of a movable deflection unit (12), in order to scan a respective scan layer (44) in the course of the movement of the scanning unit (12) with the separated light beams (26), a respective received signal is generated from the light beams (28) remitted in the monitoring area (20), and information about the objects (48) in the monitoring area (20) is obtained from the respective received signal, in particular distances are measured by means of a time-of-flight method, and the presence of a safety-relevant object (48, 50) is determined per scan layer (44) and it is decided, by jointly evaluating the presence of a safety-relevant object (48, 50) detected per scan layer (44), whether a safety-related reaction is triggered, wherein, in order to increase the robustness, a detected presence of safety-relevant objects (48, 50) over a plurality of scan layers (44) is required for triggering a safety-related reaction, with exceptionally the detected presence of a safety-relevant object (48, 50) only in a lowermost scan layer (44) above the ground (46) being sufficient for detecting lying persons.

## Revendications

1. Capteur optoélectronique (10), en particulier scanner laser, pour détecter des objets (48) dans une zone de surveillance (20), comprenant au moins un émetteur de lumière (22) pour émettre une pluralité de faisceaux lumineux (26) séparés les uns des autres, au moins un récepteur de lumière (32) pour générer un signal de réception respectif à partir des faisceaux lumineux (28) réémis des objets dans la zone de surveillance (20), une unité de déviation mobile (12) pour guider périodiquement les faisceaux lumineux émis (26) à travers la zone de surveillance (20) afin de balayer une couche de balayage respective (44) avec les faisceaux lumineux séparés (26) au cours du mouvement de l'unité de balayage (12), et une unité de commande et d'évaluation (40) configurée pour obtenir des informations sur les objets (48) dans la zone de surveillance (20) à partir du signal reçu respectif, en particulier pour mesurer une distance au moyen d'un procédé de temps de vol de la lumière, l'unité de commande et d'évaluation (40) étant en outre configurée pour détecter la présence d'un objet relié à la sécurité (48, 50) par couche de balayage (44) et pour décider par une évaluation commune de la présence détectée d'un objet relié à la sécurité(48, 50) par couche de balayage (44), si une réaction de sécurité est déclenchée, dans laquelle, pour augmenter la robustesse, une présence détectée d'objets (48, 50) reliés à la sécurité sur plusieurs couches de balayage (44) est nécessaire pour déclencher une réaction de sécurité, la présence détectée d'un objet (48, 50) relié à la sécurité uniquement dans une couche de balayage (44) la plus basse au-dessus du sol (46) étant exceptionnellement suffisante pour la détection de personnes couchées.

2. Capteur (10) selon la revendication 1,
dans lequel l'unité de commande et d'évaluation (40) est configurée pour détecter la présence d'un objet (48, 50) dans plusieurs couches de balayage (44) lorsque la présence est détectée dans les couches de balayage (44) dans les mêmes positions angulaires ou dans des positions angulaires adjacentes.

3. Capteur (10) selon l'une des revendications précédentes,
dans lequel l'unité de commande et d'évaluation (40) est configurée pour déclencher une réaction de sécurité lors de la détection de la présence d'un objet (48, 50) dans un nombre de couches de balayage (44) qui est plus grand pour un objet proche (48) que pour un objet éloigné (48).

4. Capteur (10) selon l'une des revendications précédentes,
dans lequel l'unité de commande et d'évaluation (40) est configurée pour déclencher une réaction de sécurité pour des objets (48) à une distance allant jusqu'à une première distance de sécurité lors de la détection de la présence d'un objet (48, 50) dans toutes les couches de balayage pertinentes (44), dans lequel la première distance de sécurité correspond en particulier à la distance de sécurité d'un scanner laser de sécurité avec seulement une couche de balayage.

5. Capteur (10) selon l'une des revendications précédentes,
dans lequel l'unité de commande et d'évaluation (40) est configurée pour déclencher une réaction de sécurité pour des objets (48) à une distance supérieure à une première distance de sécurité jusqu'à une deuxième distance de sécurité lors de la détection de la présence d'un objet (48, 50) dans au moins deux ou plusieurs couches de balayage (44), en particulier mutuellement adjacentes.

6. Capteur (10) selon l'une des revendications précédentes,
dans lequel l'unité de commande et d'évaluation (40) est configurée pour une évaluation du champ de protection, dans laquelle un objet (48) n'est pertinent pour la sécurité que si sa position se trouve dans un champ de protection configuré.

7. Capteur (10) selon l'une des revendications précédentes,
dans lequel l'unité de commande et d'évaluation (40) est configurée pour détecter la position et/ou l'orientation du sol (46) au moyen de la couche de balayage inférieure (44a) ou de plusieurs couches de balayage inférieures (44a- b).

8. Capteur (10) selon l'une revendications précédentes,
dans lequel l'unité de commande et d'évaluation (40) est configurée pour n'inclure que des objets (48) jusqu'à une hauteur minimale au-dessus du sol (46) pour déterminer la présence d'un objet pertinent pour la sécurité (48, 50).

9. Capteur (10) selon l'une des revendications précédentes,
dans lequel l'unité de commande et d'évaluation (40) est configurée pour déterminer une hauteur au-dessus du sol (46) en fonction de la distance et de la couche de balayage (44).

10. Capteur (10) selon l'une des revendications précédentes,
dans lequel les couches de balayage (44) présentent, au moins à proximité du sol, une résolution angulaire les unes par rapport aux autres telle que des couches de balayage (44) adjacentes présentent, pour une portée maximale, au maximum une distance correspondant à un objet (48) à détecter d'une taille minimale, notamment selon la règle arctan (taille minimale/portée).

11. Capteur (10) selon l'une des revendications précédentes,
qui est configuré comme un capteur de sécurité, notamment un scanner laser de sécurité, au sens d'une norme de sécurité pour la sécurité des machines ou des équipements de protection agissant sans contact et qui présente notamment une sortie de sécurité (42) pour l'émission d'un signal de sécurité.

12. Procédé de détection d'objets (48) dans une zone de surveillance (20), dans lequel une pluralité de faisceaux lumineux (26) séparés les uns des autres sont émis et guidés périodiquement à travers la zone de surveillance (20) à l'aide d'une unité de déviation mobile (12), afin de balayer une couche de balayage respective (44) au cours du déplacement de l'unité de balayage (12) avec les faisceaux lumineux séparés (26), un signal de réception respectif est généré à partir des faisceaux lumineux (28) réémis dans la zone de surveillance (20), et des informations sur les objets (48) dans la zone de surveillance (20) sont obtenues à partir du signal de réception respectif, en particulier des distances sont mesurées au moyen d'une méthode de temps de vol, et la présence d'un objet pertinent pour la sécurité (48, 50) est déterminée par couche de balayage (44) et il est décidé, en évaluant conjointement la présence d'un objet pertinent pour la sécurité (48, 50) détecté par couche de balayage (44), si une réaction reliée à la sécurité est déclenchée, dans lequel, afin d'augmenter la robustesse, une présence détectée d'objets pertinents pour la sécurité (48, 50) sur plusieurs couches de balayage (44) est nécessaire pour déclencher une réaction de sécurité, la présence détectée d'un objet pertinent pour la sécurité (48, 50) uniquement dans une couche de balayage (44) la plus basse au-dessus du sol (46) étant exceptionnellement suffisante pour détecter des personnes couchées.
